# EUROPEAN PATENT SPECIFICATION

(11) **EP 0 565 166 B1**
(45) Date of publication and mention of the grant of the patent: **11.11.1998**
(21) Application number: 93200886.5
(22) Date of filing: 27.03.1993
(51) Int. Cl.: G01N 35/04, B01L 9/06

(54) **Sample tube tray and magnetic conveyor**
Probenröhrchenbehälter und magnetische Förderanlage
Plateau pour tubes à échantillons et convoyeur magnétique

(30) Priority: 30.03.1992 US 859780; 25.03.1993 US 36800
(43) Date of publication of application: 13.10.1993
(73) Proprietor: Johnson & Johnson Clinical Diagnostics, Inc., Rochester New York 14650 (US)
(72) Inventor: Riall, James Daniel c/o Eastman Kodak Company, New York 14650-2201, (US); Tomasso, David Angelo c/o Eastman Kodak Company,, New York 14650-2201 (US); Porte, Johannes Jacobus c/o Eastman Kodak Company, New York 14650-2201, (US); Vanarsdale, William David c/o Eastman Kodak Comp., New York 14650-2201, (US); Jakubowicz, RaymondFrancis c/o Eastman Kodak Comp, New York 14650-2201, (US)
(74) Representative: Mercer, Christopher Paul

(56) References cited:
- WO-A-85/01642
- US-A- 2 609 915
- US-A- 2 824 638
- US-A- 3 705 788
- US-A- 4 124 122
- RESEARCH DISCLOSURE, no.318, October 1990, EMSWORTH, GB pages 849 - 850 ANONYMOUS 'cup and tip supply ring'

## Description

This invention relates to trays and conveyors of trays for supplying patient samples to an analyzer.

In the field of conveyors, it is known to mount trucks on a solid, impervious flooring under which is provided a magnetic conveyor which causes the trucks to move above the flooring by reason of cooperating magnets mounted under the trucks. Examples of such arrangements are described in US-A-2 609 915 and US-A-2 824 638.

However, such trucks have limited capability which is not particularly useful in a clinical analyzer. In particular, they provide fixed horizontal surfaces which lack the receptacles needed for sample tubes or pipette tips which have to be carried in an analyzer. Furthermore, they are not capable of rotation on the trucks as is necessary to present multiple positions to a single station. More specifically, they are not freely rotatable on the magnetic base which responds to the magnetic drive underneath.

Therefore, it has been a problem prior to the present invention to provide magnetic conveyors with a drive to move a sample tube tray from a loading station to a sample aspiration station, the tray being constructed with receptacles suitable for at least a plurality of sample tubes, and so as to be freely rotatable.

In the field of trays for sample tubes, it is known to provide movable second tube supports which are insertable into the tray above the fixed supports to allow shorter tubes and tubes of varying diameters to be supported by the inserted supports. Examples of such trays are described in EP-A-0 467 301.

Although such trays function very well, there is a disadvantage that the inserted second supports, when removed from their inserted position, are no longer attached to the tray. As a result, it is possible for the second supports to be lost or misplaced once removed, so that when another second support is required for a particular tray, there is no longer one available. Yet, it is difficult to connect the insertable second supports to the tray without them getting in the way when they are not in use.

Therefore, prior to this invention, it has also been a problem to provide a tray which has a movable second support for tubes above the fixed support, which is permanently connected to the tray without interference, when not in use.

It is therefore an object of the present invention to provide a tray and a conveyor of such trays which solve the above-mentioned problems.

More specifically, in accordance with one aspect of the invention, there is provided a sample tube tray for use in a clinical analyzer, the tray comprising:-
a base including magnet means for responding to a magnetic field;
a frame comprising a fixed bottom support portion and a plurality of receptacles constructed to receive either sample tubes or aspirating tips for aspirating a sample from a tube; and
mounting means for freely rotatably mounting the frame on the base.

In accordance with another aspect of the present invention, there is provided a recirculating conveyor for continuously supplying tube trays as described above to a clinical analyzer, the conveyor comprising:-
a support permeable to magnetic fields and impermeable to liquids; and
conveying means mounted along a path under the support and comprising a plurality of magnets and means for generating a moving magnetic field with the magnets.

Accordingly, it is an advantageous feature of the present invention that a tray is movable by a magnetic conveyor within an analyzer in a way which allows ready access to all parts of the tray due to its free rotation on its base.

It is another advantageous feature of the present invention that such a tray is provided with alternative bottom supports for tubes of varying lengths, which supports are never removed and/or lost from the tray, and are not in the way when not in use.

It is a related advantageous feature of the present invention that a cylindrical tray of general utility is provided which has ready accessibility to tubular articles carried therein.

For a better understanding of the present invention, reference will now be made, by way of example only, to the accompanying drawings in which:-
Figure 1 is a plan view of a conveyor according to the present invention and aspirating station as they are used in an analyzer;
Figure 2 is a sectioned view taken generally along the line II-II of Figure 1, with only one tray shown in place;
Figure 3 is an isometric view of one embodiment of a tray constructed in accordance with the present invention;
Figure 4 is a plan view of the tray shown in Figure 3;
Figure 5 is a sectioned view taken along the lines V-V of Figure 4;
Figure 6 is a sectioned view similar to that shown in Figure 5, illustrating a second embodiment of a tray constructed in accordance with the present invention;
Figure 7 is a side elevational view of a third embodiment of a tray constructed in accordance with the present invention;
Figures 8 & 9 are fragmentary sectioned views taken generally along the line VIII-VIII of Figure 7 showing different positions of the second bottom support;
Figure 10 is a sectioned view taken along the line X-X of Figure 9 showing the gearing engagement at the aspiration station;
Figure 11 is a fragmentary sectioned elevational view taken along line XI-XI of Figure 1;
Figure 12 is a fragmentary plan view of a tray on the conveyor and of an alternative rotating means for controlling the rotation of a tray at an aspirating station;
Figure 13 is a sectioned fragmentary elevational view similar to that shown in Figure 2 but enlarged, of an alternate embodiment of the present invention;
Figure 14 is a sectioned view taken generally along the line XIV-XIV of Figure 13; and
Figure 15 is a fragmentary plan view similar to that shown in Figure 1 but of the alternate embodiment shown in Figure 13.

The invention is described hereinafter by references to the preferred embodiments, in which a generally cylindrical tray is used with patient sample tubes and disposable aspirating tips in a clinical analyzer for doing wet assays, the tray having either springs or no springs to hold the tubes from rotating, and, conveying means for the trays that moves the trays in a closed loop.

In addition, the invention is useful regardless of the overall shape of the tray or its particular incorporation in an analyzer, and regardless of whether or not springs are used to prevent sample tubes from rotating, or what type of springs are used.

It is still further useful whether the conveyor moves the trays in closed loops or open path, and whether the reaction of the analyzer is conducted as a wet assay or as a dry assay.

Directions hereinafter referred to, such as "horizontal", "vertical", "up", "down" and the like refer to orientations which are preferred during the usage of the invention.

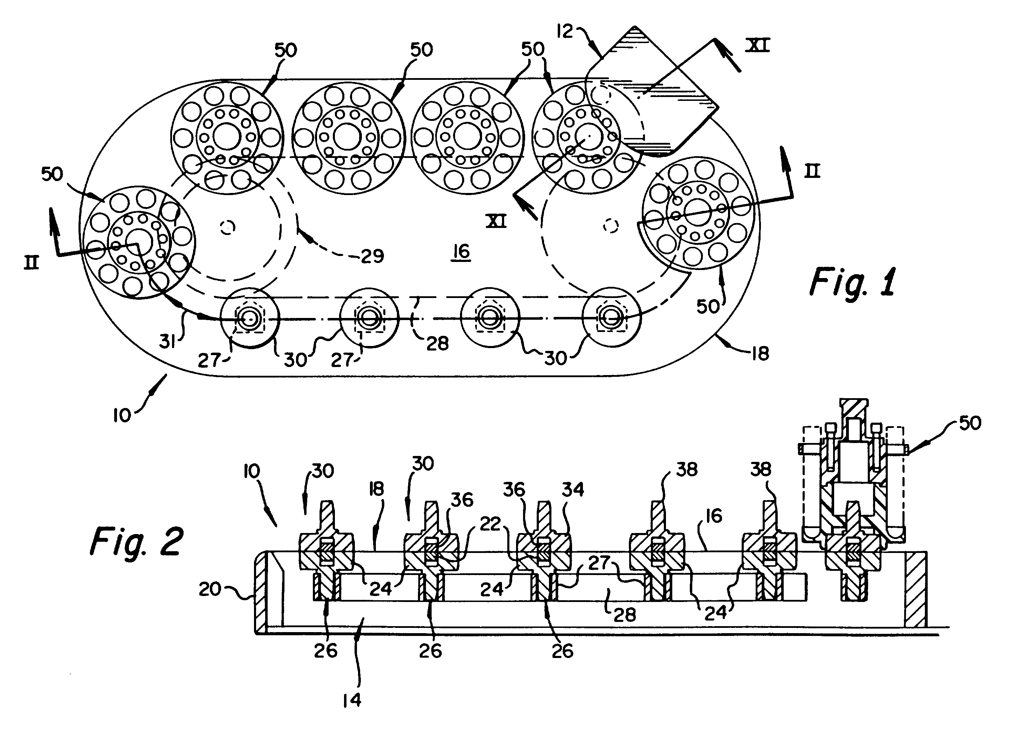

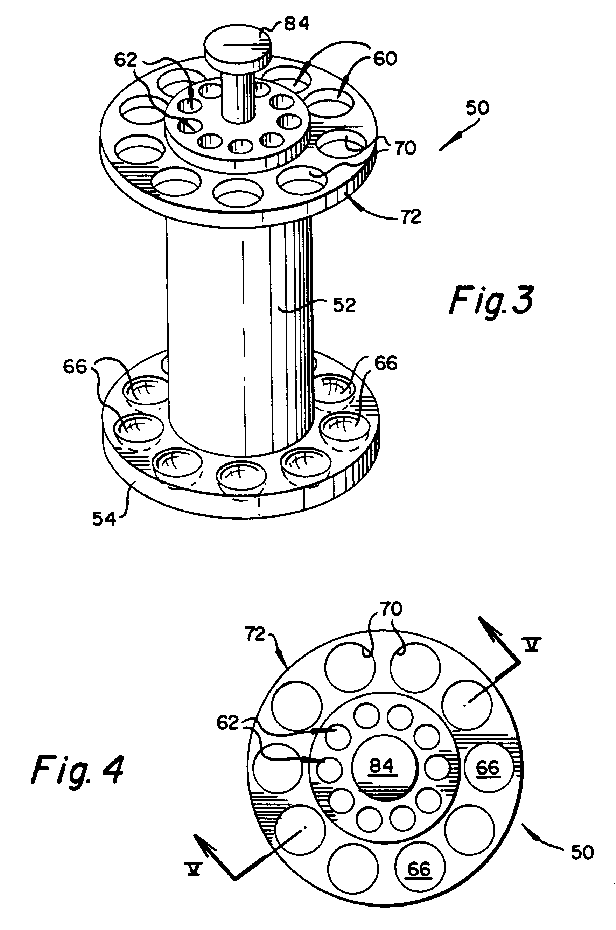

In accordance with one aspect of the invention, as shown in Figure 1, there is provided a recirculating conveyer 10 of trays 50 for supplying sample-containing tubes to a clinical analyzer (not shown), and specifically to an aspirating station 12 of the analyzer. (The details of the aspirator of station 12 are not included, as they can be conventional and do not comprise the invention.) Conveyer 10 in turn includes bases 30 on which trays 50 are removably mounted, and means 14, as shown in Figure 2, for conveying bases 30 and trays thereon around on the top surface 16 of an impermeable support 18, held in place by frame 20 of the analyzer.

Most preferably, conveying means 14 comprise a plurality of magnets 22, at least one of the magnets being held in a housing 24 which is mounted in an aperture of a projecting lug 27 by means of a spindle 26, Figure 2, formed in a continuous belt 28. The belt 28 is driven by a suitable pulley 29 and a conventional motor (not shown).

Thus there is provided a housing 24, Figure 2, and at least one magnet 22 to correspond to each base 30. Each housing 24 and base 30 is then caused to circulate around the path 31, Figure 1, as directed by belt 28, which can be any desired path, on top of surface 16. The advantage of such a conveying means is, of course, that if any liquid spills out of the trays, it will fall only on to surface 16 and not into the conveying mechanism. This simplifies cleaning of the apparatus.

Bases 30 in turn comprise a housing 34 which can be similar or identical to housings 24 in which at least one magnet 36 is placed to magnetically interact with magnets 22 of housings 24. A spindle 38 rises from each housing 34, which can be identical to the spindles 26 by which housings 24 are journalled into lugs 27.

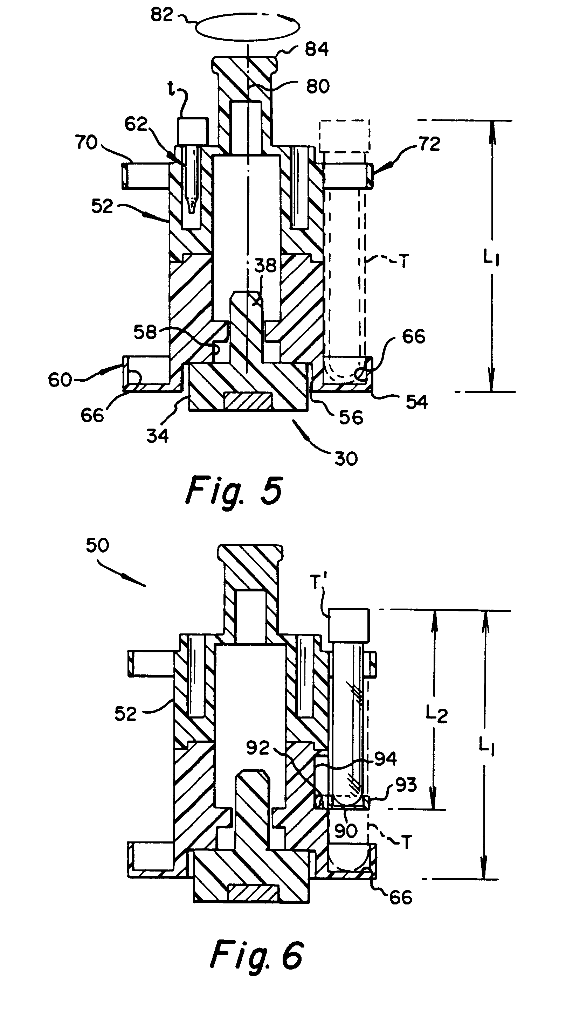

In accordance with another aspect of the invention, trays 50 are removably and rotatably mounted on bases 30, and specifically preferably to rotate concentrically about spindles 38. As shown more clearly in Figures 3 to 6, such a tray comprises a frame 52 having a bottom portion 54 recessed at 56 and 58 to receive housing 34 and spindle 38 respectively, Figure 5.

Frame 52 further comprises a plurality of receptacles 60 and 62 for receiving conventional sample tubes T and conventional aspirating tips t respectively, where tubes T can be of varying sizes. Receptacles 60 are preferably defined by bottom portion 54 which provides a fixed bottom support having therein fixed sockets 66 in the form of cylindrical recesses, and means 70 defining circular apertures arranged most preferably vertically above the sockets 66.

Preferably, a ring 72 extends out over support 54 and sockets 66, Figure 4, to provide an upper support for tubes T, since it is in this ring 72 that apertures 70 are formed, most preferably so as to be vertically aligned with sockets 66. The internal diameters of sockets 66 and apertures 70 are such as to accommodate the largest tubes T of sample which are to be used.

Apertures 70 are shown as formed by a complete closure in ring 72. Optionally, however, a small gap in the closure is tolerable, provided it is not large enough to allow a tube to fall out.

On the other hand, receptacles 62 can be simple cylindrical bores extending preferably vertically down into frame 52, of a size and shape to hold tips t therein by their fins. Receptacles 62 thus preferably form a concentric ring which is preferably inside the concentric ring formed by receptacles 60, although the ring of receptacles 62 can also be outside the ring of receptacles 60 if ring 72 is extended considerably farther from axis 80, the axis of symmetry of tray 50.

Axis 80 is also preferably the axis of rotation of tray 50, as shown by arrow 82 in Figure 5. Such rotation can be achieved manually, for example, by using handle 84 which is mounted preferably on axis 80. Preferably, it is rotated mechanically by means hereinafter described.

Tips t need not have more than one size. However, tubes T conventionally come also in sizes smaller than the length L₁ shown in Figure 5. For example, length L₂ is also common, with or without the same diameter for tube T', Figure 6.

In accordance with another aspect of the invention, trays 50 can include a second, moveable bottom support 90 for such shorter tubes, and means 92 for pivotally and permanently mounting supports 90 on frame 52 between the fixed bottom support of portion 54 and the upper support of ring 72. Support 90 includes a vertically extending shoulder 93, which can be a partial ring, or a complete ring (as shown) to act as a socket for supporting tube T'. Such an arrangement permits movable supports 90 to pivot into or out of alignment with apertures 70 (and the bottom support of sockets 66), to allow either a tube T' of length L₂ or tube T of length L₁, respectively, to be supported. At the same time, support 90 remains attached at all times to frame 52, even when not in active use. As shown in Figure 6, pivot means 92 comprise pins which permit pivoting of movable supports 90 about a horizontal axis, ie an axis perpendicular to axis 80.

Additionally, there is preferably included a recess 94 for each support 90, in tray frame 52, shaped to receive support 90 when it is pivoted out of the way to allow a tube T of length L₁ to be supported and carried . Recess 94 is of course adjacent to pin 92, and is sufficiently deep as to accommodate support 90 generally flush with the vertical sidewall of frame 52, when support 90 is pivoted out of the way.

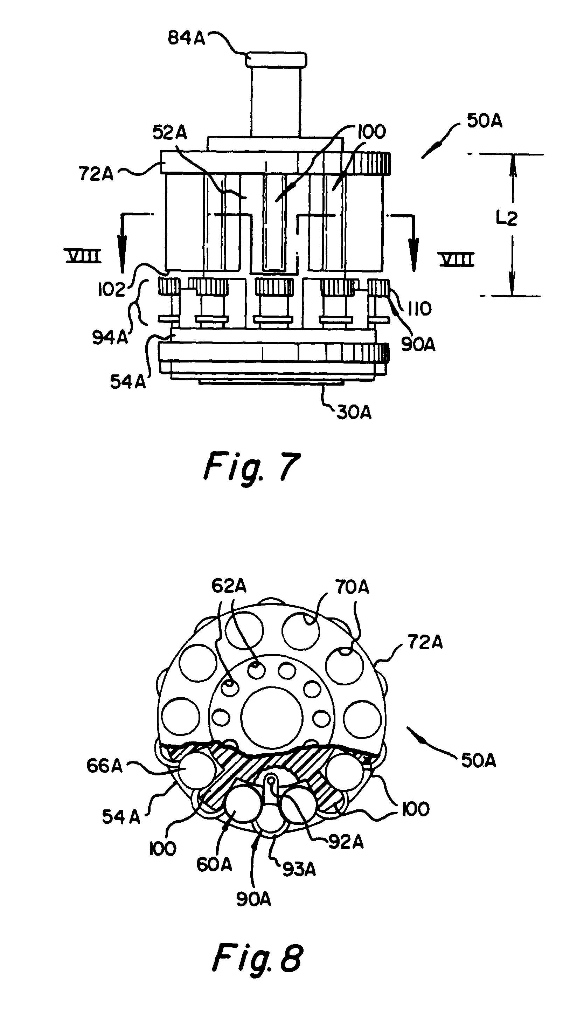

Alternatively, the movable support can be pivoted about a vertical axis, so that the support moves within a horizontal plane, Figures 7 to 10. Parts similar to those previously described bear the same reference numeral to which the distinguishing suffix "A" is appended.

Thus, in Figures 7 and 8, tray 50A sits on a base 30A, Figure 7, and comprises a frame 52A with a fixed bottom support 54A in which recessed sockets 66A are formed, Figure 8, upper ring 72A with apertures 70A to complete, with sockets 66A, receptacles 60A, bores 62A, for tips t (not shown), and handle 84A as described heretofore, Figure 7.

Additionally, to facilitate manual grasping of tray 50A at other than handle 84A, frame 52A includes as part of the vertical support of tubes T or T', fixed ribs 100, Figures 7 and 8, which project outwardly between receptacles 60A, as part of frame 52A, Figure 8. Ribs 100 are removed, however, at the portion 102, Figure 7, adjacent bottom support 54A, to create recesses 94A within which movable bottom supports 90A are pivotally mounted by pins 92A, Figure 8, which are disposed vertically for horizontal pivoting. At least a portion of shoulder 93A is provided in supports 90A, to assist in seating a shorter tube of length L₂, Figure 7.

Optionally, exterior portions of supports 90A can be knurled, as at 110, for example, to provide easier manual grasping of the movable supports.

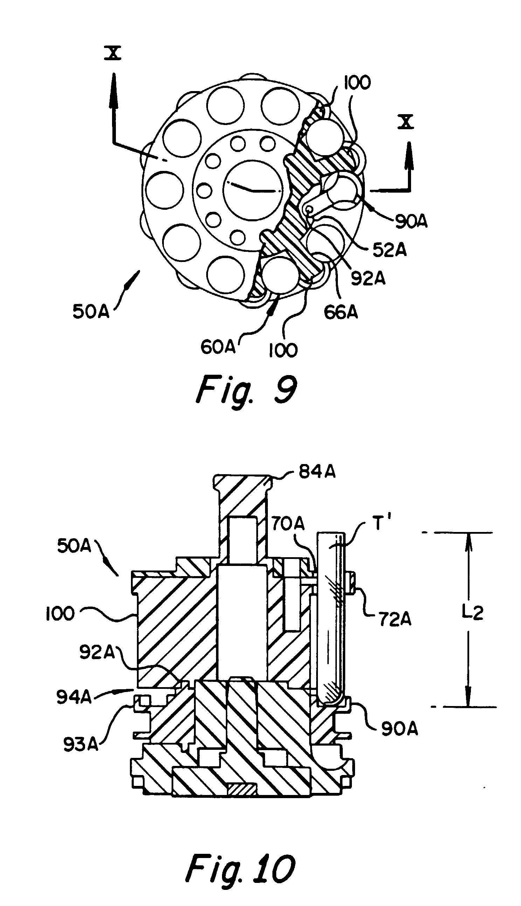

As shown in Figures 7 and 8, supports 90A are withdrawn into their recesses 94A, so that the largest tube can be inserted into receptacles 60A. However, when a tube T' is to be used, Figures 9 and 10, a support 90A is pivoted within a horizontal plane out of its recess 94A, Figure 10, and into vertical alignment with an aperture 70A, to act as the bottom support for tube T' of a length L₂. This is easily done by the operator of the analyzer, when the tray is removed from its base 30A via handle 84A to manually load sample tubes into receptacles 60A.

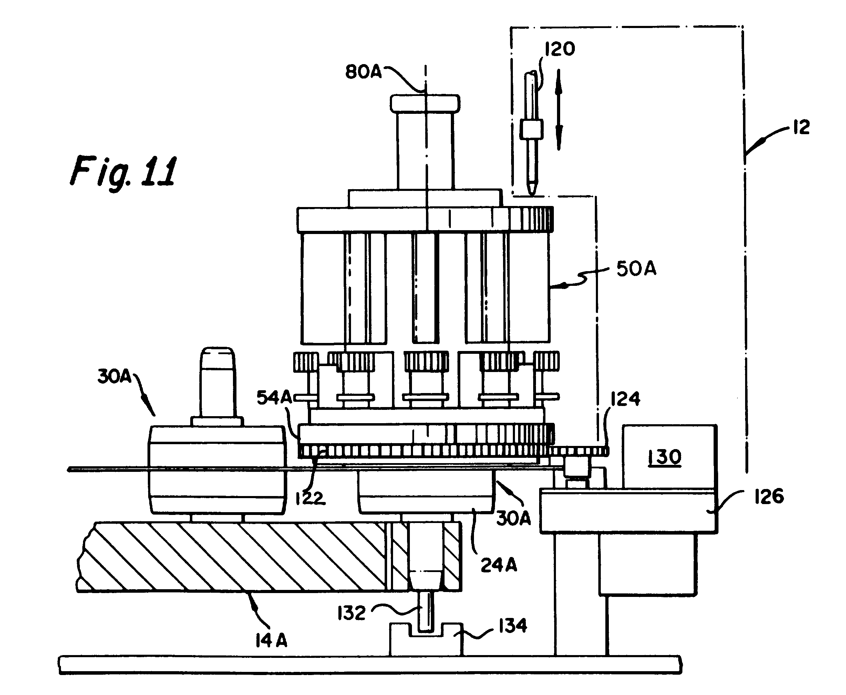

As noted above, the function of conveyor 10 is to move trays 50 or 50A into position at aspirator station 12, which includes a conventional aspirator 120, Figure 11. However, because of the free rotation of trays 50A on base 30A about axis 80A, it is important that tray 50A be rotated somehow to place the desired sample tube directly under aspirator 120. To this end, means such as a gear 122 are mounted around the circumference of bottom portion 54A, for engagement by a suitable drive means, such as a pinion gear 124 driven by motor 126. Conveying means 14A is effective to force gear 122 into engagement with gear 124, which is preferably already rotating as a tray approaches the aspirating station. The magnetic coupling of each tray to conveying housings 24A is sufficiently compliant to accommodate any inadvertent misalignment of gear teeth at the time of meshing. A signalling means in turn is used to designate at least a "home" position, and to this end any flag (not shown), for example, a projecting shoulder, a magnet, or a light reflector is disposed at 130, on frame 52A, for example, adjacent bottom portion 54A. The flag cooperates with a signal generator 130, which comprises either an extending trigger switch (not shown) which triggers when contacted by the shoulder of the flag, or a cooperating magnet or coil to respond to the magnet of the flag, or a photoelectric emitter and detector pair that cooperate with the reflector of the flag.

Optionally, one of the housings 24A can include a flag 132 depending therefrom, which cooperates with signal generator 134 to identify which tray is the "home" tray on the conveying means.

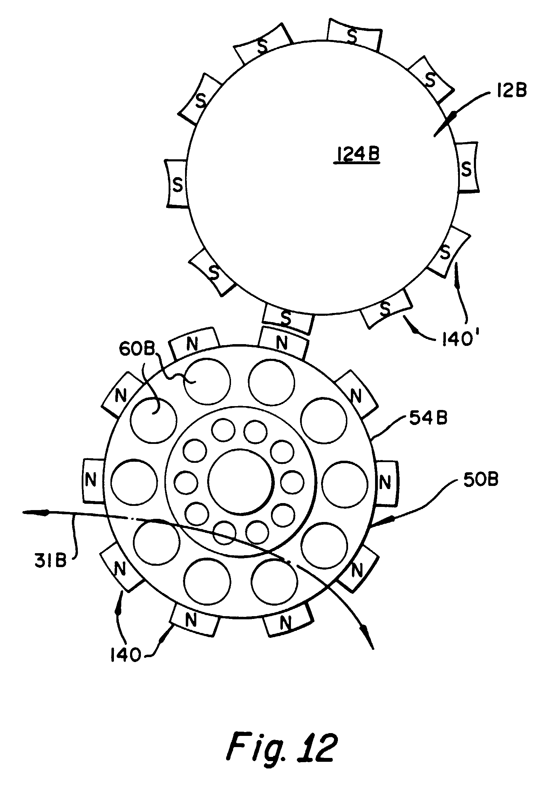

Alternatively, Figure 12, the means for rotating tray 50 or 50A can comprise, for example, devices other than gears. Parts similar to those previously described bear the same reference numeral, to which the distinguishing suffix "B" is appended.

Thus, tray 50B is as described for either of the two embodiments above, with receptacles 60B for sample tubes, rotatably mounted on a base, not shown. Aspirator station 12B is positioned adjacent to the closed path 31B traced by trays 50B, also as described above. However, the controlled and directed rotation of a tray, to align receptacles 60B with the aspirator of station 12B, comprises paired north and south magnets 140, 140' disposed around bottom portion 54B, and on a drive wheel 124B. A "home" signalling means such as is described above, is also used to identify which receptacle is under the aspirator.

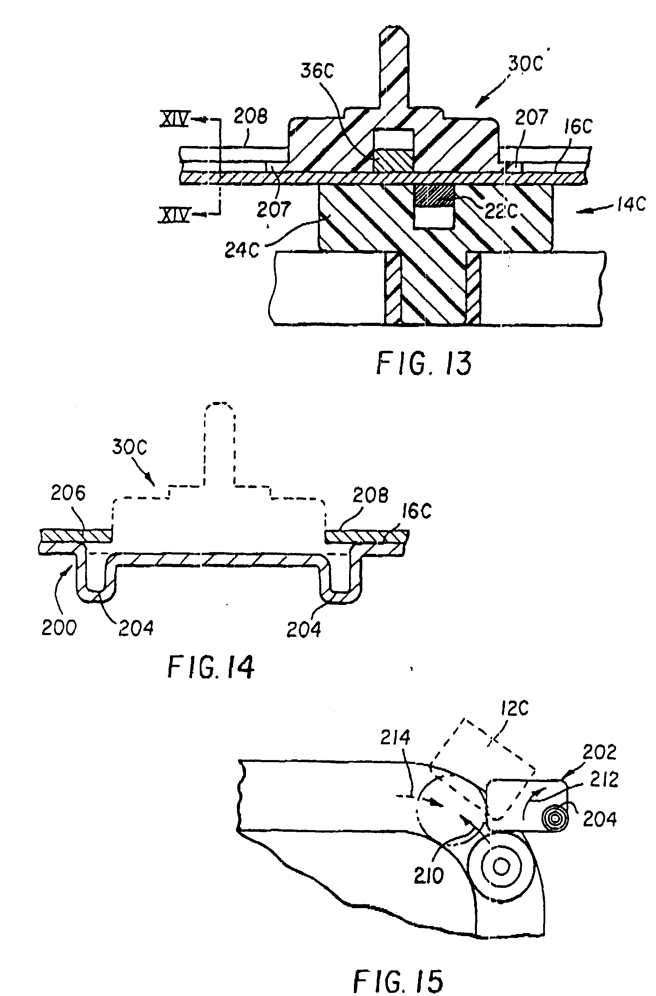

The interaction of the magnets 22 and 36 shown in Figure 2 shows one attraction. In the alternative, it can be one of repulsion so as to minimize the force which has to be delivered by belt 28 to move the trays over surface 16, as shown in Figures 13 and 14. Parts similar to those previously described bear the same reference numerals to which the distinguishing suffix "C" is appended.

Thus, bases 30C and conveying means 14C are constructed as before, except that magnets 22C and 36C are arranged to be repulsive, forcing the base 30C to move in advance of the underlying housing 24C. Also, since a repulsive force can be omnidirectional, it is preferred that surface 16C be shaped, Figure 14, with a track 200 to guide the bases. The track 200 preferably has a general W-shape in section.

Most preferably, Figure 14, a gutter is provided at each edge 204 between which the surface 16C is disposed between the level of the gutters and the surface 16C elsewhere to retain the bases 30C. That is, the gutters tend to collect any spilled liquid for cleaning.

Overhangs 206 and 208 are provided above each edge 204 to cooperate with a lip 207 on bases 30C, Figure 13, to restrain those bases from magnetically "jumping" vertically out of alignment, in the event the respective housing for such a base is inadvertently forced directly underneath the base. To assist in cleaning out at least one of the gutters, overhang 206, Figure 14, can be removably attached rather than permanently attached.

In such an arrangement, there iS a need for a positive stop of the tray at station 12C, (Figure 15) and accordingly a pivotable stop member 202 is mounted adjacent station 12C with a spring 204 biasing it outwardly into the track. As a tray comes by, as indicated by arrow 210, the member 202 pivots out of the way, in the direction shown by arrow 212. The conveyor is then reversed enough, as shown by dotted arrow 214, until the tray abuts against the member 202 as shown in phantom.

The invention disclosed herein may be practiced in the absence of any element which is not specifically disclosed herein.

The invention has been described in detail with particular reference to preferred embodiments thereof, but it will be understood that variations and modifications can be effected within the scope of the invention as defined by the claims.

## Claims

1. A sample tube tray (30, 34, 36, 38, 50, 52, 54, 56, 58, 60, 62, 66, 70, 72, 84, 90, 92, 93, 94; 50A, 52A, 54A, 60A, 66A, 70A, 72A, 84A, 90A, 92A, 93A, 94A; 50B, 54B, 60B; 30C, 36C) for use in a clinical analyzer, the tray (30, 34, 36, 38, 50, 52, 54, 56, 58, 60, 62, 66, 70, 72, 84, 90, 92, 93, 94; 30A, 50A, 52A, 54A, 60A, 66A, 70A, 72A, 84A, 90A, 92A, 93A, 94A; 50B, 54B, 60B; 30C, 36C) comprising:-
a base (30, 36; 30A; 30C, 36C) including magnet means (36; 36C) for responding to a magnetic field;
a frame (52, 54, 60, 62, 70, 72; 52A, 54A, 60A, 70A, 72A; 54B, 60B) comprising a fixed bottom support portion (54; 54A; 54B) and a plurality of receptacles (60, 62; 60A; 60B) constructed to receive either sample tubes (T; T') or aspirating tips (t) for aspirating a sample from a tube (T; T'); and
mounting means (34, 38, 56, 58) for freely rotatably mounting the frame (52, 54, 60, 62, 70, 72; 52A, 54A, 60A, 70A, 72A; 54B, 60B) on the base (30, 36; 30A; 30C, 36C).

2. A tube tray according to claim 1, further including gear means (122) on the frame (52, 54, 60, 62, 70, 72; 52A, 54A, 60A, 70A, 72A; 54B, 60B) for engaging a driving gear (124; 124B) at an aspirating station (12, 120; 12C), and a signalling means (128) for signalling the position on the frame (52, 54, 60, 62, 70, 72; 52A, 54A, 60A, 70A, 72A; 54B, 60B) which is engaged by the driving gear (124; 124B).

3. A tube tray according to claim 1 or 2, wherein the receptacles (60, 62; 60A; 60B) are disposed in a first concentric ring on the frame (52, 54, 60, 62, 70, 72; 52A, 54A, 60A, 70A, 72A; 54B, 60B).

4. A tube tray according to claim 3, further including a second concentric ring of receptacles (62) in the frame (52, 54, 60, 62, 70, 72; 52A, 54A, 60A, 70A, 72A; 54B, 60B) positioned inside the first concentric ring.

5. A tube tray according to claim 4, wherein the receptacles (62) of the second concentric ring are constructed with a shape effective to receive aspirating tips (t) and the receptacles (60; 60A; 60B) of the first concentric ring with a shape effective to receive cylindrical sample tubes (T, T').

6. A tube tray according to claim 5, wherein the receptacles (60; 60A; 60B) of the first ring each comprises means (70, 72; 70A, 72A) defining a circular aperture located near one end of the frame (52, 54, 60, 62, 70, 72; 52A, 54A, 60A, 70A, 72A; 54B, 60B) and a fixed socket (66; 66A; 66B) near the other end of the frame (52, 54, 60, 62, 70, 72; 52A, 54A, 60A, 70A, 72A; 54B, 60B), the aperture (70, 72; 70A, 72A) and the socket (66; 66A; 66B) being axially aligned so as to receive a sample tube (T, T').

7. A tube tray according to claim 6, wherein the fixed socket (66; 66A; 66B) is formed in the bottom support portion (54; 54A; 54B).

8. A tube tray according to any one of the preceding claims, wherein the means (70, 72; 70A, 72A) defining a circular aperture located near one end of the frame (52, 54, 60, 62, 70, 72; 52A, 54A, 60A, 70A, 72A; 54B, 60B) comprises an upper fixed support portion spaced away from the fixed bottom support portion (54; 54A; 54B).

9. A tube tray according to claim 8, further including a movable bottom support portion (90, 92, 93; 90A, 92A, 93A) pivotally mounted on the frame (52, 54, 60, 62, 70, 72; 52A, 54A, 60A, 70A, 72A; 54B, 60B) between the fixed bottom support portion (54; 54A; 54B) and the upper support portion (70, 72; 70A, 72A) to pivot into or out of alignment with the fixed bottom support (54; 54A; 54B) so that tubes of two alternative lengths (L₁, L₂) can be mounted in the same receptacles (60; 60A; 60B).

10. A tube tray according to claim 9, wherein the movable support portion (90, 92, 93; 90A, 92A, 93A) is pivotally mounted about a generally horizontal axis for pivotal movement from a generally horizontal plane to a generally vertical plane.

11. A tube tray according to claim 9, wherein the movable support portion (90, 92, 93; 90A, 92A, 93A) is pivotally mounted about a generally vertical axis for pivotal movement in a generally horizontal plane.

12. A tube tray according to any one of claims 9 to 11, wherein a recess (94; 94A) is provided in the frame (52, 54, 60, 62, 70, 72; 52A, 54A, 60A, 70A, 72A; 54B, 60B) adjacent to where the movable bottom support portion (90, 92, 93; 90A, 92A, 93A) is pivotally mounted, the movable bottom support portion (90, 92, 93; 90A, 92A, 93A) being folded into the recess (94; 94A) when it is not in use.

13. A tube tray according to claim 12, further including fixed vertical ribs (100) projecting outwardly between the receptacles (60A; 60B), the recesses (94; 94A) being positioned within the ribs (100).

14. A recirculating conveyor (10) for continuously supplying tube trays (30, 34, 36, 38, 50, 52, 54, 56, 58, 60, 62, 66, 70, 72, 84, 90, 92, 93, 94; 50A, 52A, 54A, 60A, 66A, 70A, 72A, 84A, 90A, 92A, 93A, 94A; 50B, 54B, 60B; 30C, 36C) according to any one of the preceding claims to a clinical analyzer, the conveyor (10) comprising:-
a support (18) permeable to magnetic fields and impermeable to liquids; and
conveying means (14, 24, 26, 27, 28, 29, 31; 14C, 24C) mounted along a path (31; 31B) under the support (18) and comprising a plurality of magnets (22; 22C) and means for generating a moving magnetic field with the magnets (22; 22C).

15. A conveyor according to claim 14, wherein the path (31; 31B) forms a continuous loop.

16. A conveyor according to claim 14 or 15, wherein the magnet (36; 36C) in the base (30; 30C) of the tray (30, 34, 36, 38, 50, 52, 54, 56, 58, 60, 62, 66, 70, 72, 84, 90, 92, 93, 94; 30A, 50A, 52A, 54A, 60A, 66A, 70A, 72A, 84A, 90A, 92A, 93A, 94A; 50B, 54B, 60B; 30C, 36C) cooperates with the moving magnetic field produced by the magnets (22; 22C) of the conveying means (14, 24, 26, 27, 28, 29, 31; 14C, 24C).

17. A conveyor according to claim 14 or 15, further including rotating means (122, 124, 126; 124B) at the aspirating station (12; 12C) for rotating the tray (30, 34, 36, 38, 50, 52, 54, 56, 58, 60, 62, 66, 70, 72, 84, 90, 92, 93, 94; 30A, 50A, 52A, 54A, 60A, 66A, 70A, 72A, 84A, 90A, 92A, 93A, 94A; 50B, 54B, 60B; 30C, 36C) on its base (30, 36; 30A; 30C, 36C).

18. A conveyor according to claim 17, wherein the rotating means comprise gear means (122) on the frame (52, 54, 60, 62, 70, 72; 52A, 54A, 60A, 70A, 72A; 54B, 60B) and an engaging driving gear (124; 124B) at the aspirating station (12; 12C), the conveying means being constructed to hold the gear (124; 124B) and the gear means (122) in engagement at the aspirating station (12; 12C).

19. A conveyor according to claim 18, further including signalling means (128, 130, 132, 134) for signalling the position on the frame (52, 54, 60, 62, 70, 72; 52A, 54A, 60A, 70A, 72A; 54B, 60B) which is engaged by the driving gear (124; 124B).

20. A conveyor according to any one of claims 14 to 19, wherein the magnets (36) of the tray (30, 34, 36, 38, 50, 52, 54, 56, 58, 60, 62, 66, 70, 72, 84, 90, 92, 93, 94; 50A, 52A, 54A, 60A, 66A, 70A, 72A, 84A, 90A, 92A, 93A, 94A; 50B, 54B, 60B) are attracted by the magnets (22) of the conveying means (14, 24, 26, 27, 28, 29, 31).

21. A conveyor according to any one of claims 14 to 19, wherein the magnets (36C) of the tray (30C, 36C) are repelled by the magnets (22C) of the conveying means (14C, 24C).

## Patentansprüche

1. Proberöhrchen-Haltevorrichtung (30, 34, 36, 38, 50, 52, 54, 56, 58, 60, 62, 66, 70, 72, 84, 90, 92, 93, 94; 30A, 50A, 52A, 54A, 60A, 66A, 70A, 72A, 84A, 90A, 92A, 93A, 94A; 50B, 54B, 60B; 30C, 36C) zur Verwendung in einem klinischen Analysegerät, wobei diese Haltevorrichtung (30, 34, 36, 38, 50, 52, 54, 56, 58, 60, 62, 66, 70, 72, 84, 90, 92, 93, 94; 30A, 50A, 52A, 54A, 60A, 66A, 70A, 72A, 84A, 90A, 92A, 93A, 94A; 50B, 54B, 60B; 30C, 36C) umfaßt:
einen Grundkörper (30, 36; 30A; 30C, 36C) mit einer Magneteinrichtung (36; 36C) zur Reaktion auf ein Magnetfeld;
ein Gestell (52, 54, 60, 62, 70, 72; 52A, 54A, 60A, 70A, 72A; 54B, 60B) bestehend aus einem festen Boden-Auflageteil (54; 54A; 54B) und einer Vielzahl von Aufnahmen (60, 62; 60A; 60B), die entweder zur Aufnahme von Proberöhrchen (T; T') oder von Absaugspitzen (t) zum Absaugen einer Probe aus einem Röhrchen (T; T') eingerichtet sind und
einer Lagerungs-Einrichtung (34, 38, 56, 58), die eine frei drehbare Lagerung des Gestelles (52, 54, 60, 62, 70, 72; 52A, 54A, 60A, 70A, 72A; 54B, 60B) auf dem Grundkörper (30, 36; 30A; 30C, 36C) gestattet.

2. Proberöhrchen-Haltevorrichtung nach Anspruch 1, welche weiterhin ein Zahnrad (122) am Gestell (52, 54, 60, 62, 70, 72; 52A, 54A, 60A, 70A, 72A; 54B, 60B) zum Eingriff eines Antriebszahnrades (124; 124B) an einer Absaugstation (12, 120; 12C) sowie eine Signaleinrichtung (128) zur Signalisierung der Position am Gestell (52, 54, 60, 62, 70, 72; 52A, 54A, 60A, 70A, 72A; 54B, 60B), die sich mit dem Antriebszahnrad (124; 124B) im Eingriff befindet, aufweist.

3. Proberöhrchen-Haltevorrichtung nach Anspruch 1 oder 2, bei welcher die Aufnahmen (60, 62; 60A; 60B) in einem ersten konzentrischen Ring am Gestell (52, 54, 60, 62, 70, 72; 52A, 54A, 60A, 70A, 72A; 54B, 60B) angeordnet sind.

4. Proberöhrchen-Haltevorrichtung nach Anspruch 3, welche weiterhin einen zweiten konzentrischen Ring von Aufnahmen (62) am Gestell (52, 54, 60, 62, 70, 72; 52A, 54A, 60A, 70A, 72A; 54B, 60B) aufweist, der innerhalb des ersten konzentrischen Ringes angeordnet ist.

5. Proberöhrchen-Haltevorrichtung nach Anspruch 4, bei welcher die Aufnahmen (62) des zweiten konzentrischen Ringes in einer Form ausgeführt sind, die zur Aufnahme von Absaugspitzen (t) geeignet ist, und die Aufnahmen (60; 60A; 60B) des ersten konzentrischen Ringes in einer Form ausgeführt sind, die zur Aufnahme zylindrischer Proberöhrchen (T, T') geeignet ist.

6. Proberöhrchen-Haltevorrichtung nach Anspruch 5, bei welcher die Aufnahmen (60; 60A; 60B) des ersten Ringes Einrichtungen (70, 72; 70A, 72A) umfassen, die jeweils eine runde Öffnung in der Nähe eines Endes des Gestells (52, 54, 60, 62, 70, 72; 52A, 54A, 60A, 70A, 72A; 54B, 60B) begrenzen und eine feste Aufnahmebohrung (66; 66A; 66B) in der Nähe des anderen Endes des Gestelles (52, 54, 60, 62, 70, 72; 52A, 54A, 60A, 70A, 72A; 54B, 60B) aufweisen, wobei die Öffnungen (70, 72; 70A, 72A) und die Aufnahmebohrungen (66; 66A; 66B) jeweils axial zueinander ausgerichtet sind, um ein Proberöhrchen (T, T') aufzunehmen.

7. Proberöhrchen-Haltevorrichtung nach Anspruch 6, bei welcher die festen Aufnahmebohrungen (66; 66A; 66B) im Boden-Auflageteil (54; 54A; 54B) ausgebildet sind.

8. Proberöhrchen-Haltevorrichtung nach einem der vorhergehenden Ansprüche, bei welcher die Einrichtungen (70, 72; 70A, 72A), die jeweils eine runde Öffnung in der Nähe eines Endes des Gestelles (52, 54, 60, 62, 70, 72; 52A, 54A, 60A, 70A, 72A; 54B, 60B) begrenzen, aus einem oberen, festen Auflageteil bestehen, das in einem Abstand vom festen Boden-Auflageteil (54; 54A; 54B) angeordnet ist.

9. Proberöhrchen-Haltevorrichtung nach Anspruch 8, welche weiterhin ein bewegliches Boden-Auflageteil (90, 92, 93; 90A, 92A, 93A) aufweist, das am Gestell (52, 54, 60, 62, 70, 72; 52A, 54A, 60A, 70A, 72A; 54B, 60B) zwischen dem festen Boden-Auflageteil (54; 54A; 54B) und dem oberen Halteteil (70, 72; 70A, 72A) schwenkbar angebracht ist, so daß es zum festen Boden-Auflageteil (54; 54A; 54B) ausgerichtet oder aus dieser Ausrichtung heraus geschwenkt werden kann und Röhrchen mit zwei unterschiedlichen Längen (L1, L2) in den gleichen Aufnahmen (60; 60A; 60B) gehalten werden können.

10. Proberöhrchen-Haltevorrichtung nach Anspruch 9, bei welcher das bewegliche Auflageteil (90, 92, 93; 90A, 92A, 93A) um eine allgemein horizontale Achse schwenkbar angebracht ist, um eine Schwenkbewegung aus einer allgemein horizontalen Ebene in eine allgemein vertikale Ebene durchführen zu können.

11. Proberöhrchen-Haltevorrichtung nach Anspruch 9, bei welcher das bewegliche Auflageteil (90, 92, 93; 90A, 92A, 93A) um eine allgemein vertikale Achse schwenkbar angebracht ist, um eine Schwenkbewegung in einer allgemein horizontalen Ebene durchführen zu können.

12. Proberöhrchen-Haltevorrichtung nach einem der Ansprüche 9 bis 11, bei welcher in der Nähe des schwenkbar angebrachten, beweglichen Boden-Auflageteiles (90, 92, 93; 90A, 92A, 93A) im Gestell (52, 54, 60, 62, 70, 72; 52A, 54A, 60A, 70A, 72A; 54B, 60B) eine Vertiefung (94; 94A) vorgesehen ist, so daß das bewegliche Boden-Auflageteil (90, 92, 93; 90A, 92A, 93A) in die Vertiefung (94; 94A) geklappt werden kann, wenn es außer Gebrauch ist.

13. Proberöhrchen-Haltevorrichtung nach Anspruch 12, welche weiterhin feste vertikale Rippen (100) aufweist, die zwischen den Aufnahmen (60A; 60B) nach außen ragen, wobei die Vertiefungen (94; 94A) zwischen diesen Rippen (100) angeordnet sind.

14. Umlauf-Förderanlage (10) zur kontinuierlichen Zufuhr von Proberöhrchen-Haltevorrichtungen (30, 34, 36, 38, 50, 52, 54, 56, 58, 60, 62, 66, 70, 72, 84, 90, 92, 93, 94; 50A, 52A, 54A, 60A, 66A, 70A, 72A, 84A, 90A, 92A, 93A, 94A; 50B, 54B, 60B; 30C, 36C) nach einem der bisherigen Ansprüche zum einem klinischen Analysegerät, wobei die Förderanlage (10) umfaßt:
einen Träger (18), der für Magnetfelder durchlässig und für Flüssigkeiten undurchlässig ist und
eine Fördereinrichtung (14, 24, 26, 27, 28, 29, 31; 14C, 24C), die entlang einer Bahn (31; 31B) unter dem Träger angebracht ist und eine Vielzahl von Magneten (22; 22C) sowie eine Einrichtung zur Erzeugung eines bewegten Magnetfeldes mittels dieser Magneten (22; 22C) umfaßt.

15. Förderanlage nach Anspruch 14, bei welcher die Bahn (31; 31B) eine geschlossene Schleife bildet.

16. Förderanlage nach Anspruch 14 oder 15, bei welcher der Magnet (36; 36C) im Grundkörper (30; 30C) der Haltevorrichtung (30, 34, 36, 38, 50, 52, 54, 56, 58, 60, 62, 66, 70, 72, 84, 90, 92, 93, 94; 30A, 50A, 52A, 54A, 60A, 66A, 70A, 72A, 84A, 90A, 92A, 93A, 94A; 50B, 54B, 60B; 30C, 36C) mit dem bewegten Magnetfeld zusammenwirkt, das durch die Magneten (22; 22C) der Fördereinrichtung (14, 24, 26, 27, 28, 29, 31; 14C, 24C) erzeugt wird.

17. Förderanlage nach Anspruch 14 oder 15, welche weiterhin an der Absaugstation (12; 12C) eine Dreheinrichtung (122, 124, 126; 124B) aufweist, um die Haltevorrichtung (30, 34, 36, 38, 50, 52, 54, 56, 58, 60, 62, 66, 70, 72, 84, 90, 92, 93, 94; 30A, 50A, 52A, 54A, 60A, 66A, 70A, 72A, 84A, 90A, 92A, 93A, 94A; 50B, 54B, 60B; 30C, 36C) oder ihren Grundkörper (30, 36; 30A; 30C, 36C) zu drehen.

18. Förderanlage nach Anspruch 17, bei welcher die Dreheinrichtung aus einer Zahnradeinrichtung (122) am Gestell (52, 54, 60, 62, 70, 72; 52A, 54A, 60A, 70A, 72A; 54B, 60B) und einem Antriebs-Eingriffs-Zahnrad (124; 124B) an der Absaugstation (12; 12C) besteht, wobei die Fördereinrichtung derart aufgebaut ist, daß das Zahnrad (124; 124B) und die Zahnradeinrichtung (122) an der Absaugstation(12; 12C) im Eingriff miteinander gehalten werden.

19. Förderanlage nach Anspruch 18, welche weiterhin eine Signaleinrichtung (128, 130, 132, 134) aufweist, um diejenige Position auf dem Gestell (52, 54, 60, 62, 70, 72; 52A, 54A, 60A, 70A, 72A; 54B, 60B) anzuzeigen, die mit dem Antriebszahnrad (124; 124B) im Eingriff steht.

20. Förderanlage nach einem der Ansprüche 14 bis 19, bei welcher die Magneten (36) der Haltevorrichtung (30, 34, 36, 38, 50, 52, 54, 56, 58, 60, 62, 66, 70, 72, 84, 90, 92, 93, 94; 50A, 52A, 54A, 60A, 66A, 70A, 72A, 84A, 90A, 92A, 93A, 94A; 50B, 54B, 60B) von den Magneten (22) der Fördereinrichtung (14, 24, 26, 27, 28, 29, 31) angezogen werden.

21. Förderanlage nach einem der Ansprüche 14 bis 19, bei welcher die Magneten (36C) der Haltevorrichtung (30C, 36C) von den Magneten (22C) der Fördereinrichtung (14C, 24C) abgestoßen werden.

## Revendications

1. Portoir de tubes à échantillon (30, 34, 36, 38, 50, 52, 54, 56, 58, 60, 62, 66, 70, 72, 84, 90, 92, 93, 94; 50A, 52A, 54A, 60A, 66A, 70A, 72A, 84A, 90A, 92A, 93A, 94A; 50B, 54B, 60B; 30C, 36C) pour emploi dans un analyseur clinique, le portoir (30, 34, 36, 38, 50, 52, 54, 56, 58, 60, 62, 66, 70, 72, 84, 90, 92, 93, 94; 30A, 50A, 52A, 54A, 60A, 66A, 70A, 72A, 84A, 90A, 92A, 93A, 94A; 50B, 54B, 60B; 30C, 36C) comportant:
◆ une base (30, 36; 30A; 30C, 36C) incluant des moyens magnétiques (36, 36C) pour réagir à un champ magnétique;
◆ un cadre (52, 54, 60, 62, 70, 72; 52A, 54A, 60A, 70A, 72A; 54B, 60B) comprenant une portion (54; 54A; 54B) formant support inférieur fixe et une pluralité de réceptacles (60, 62; 60A; 60B) construits pour recevoir soit des tubes à échantillon (T; T') soit des embouts d'aspiration (t) pour aspirer un échantillon dans un tube (T; T'); et
◆ des moyens de montage (34, 38, 56, 58) pour y monter, en rotation libre, le cadre (52, 54, 60, 62, 70, 72; 52A, 54A, 60A, 70A, 72A; 54B, 60B) sur la base (30, 36; 30A; 30C, 36C).

2. Portoir de tubes selon la revendication 1, incluant en outre des moyens formant pignon (122) sur le cadre (52, 54, 60, 62, 70, 72; 52A, 54A, 60A, 70A, 72A; 54B, 60B) pour engrener avec un pignon d'entraînement (124; 124B) à une station d'aspiration (12, 120; 12C) et un moyen de signalisation (128) pour signaler la position sur le cadre (52, 54, 60, 62, 70, 72; 52A, 54A, 60A, 70A, 72A; 54B, 60B) qui engrène avec le pignon d'entraînement (124; 124B).

3. Portoir de tubes selon la revendication 1 ou 2, dans lequel les réceptacles (60, 62; 60A; 60B) sont disposés selon un premier anneau concentrique sur le cadre (52, 54, 60, 62, 70, 72; 52A, 54A, 60A, 70A, 72A; 54B, 60B).

4. Portoir de tubes selon la revendication 3, incluant en outre un second anneau concentrique de réceptacles (62) dans le cadre (52, 54, 60, 62, 70, 72; 52A, 54A, 60A, 70A, 72A; 54B, 60B), positionné à l'intérieur du premier anneau concentrique.

5. Portoir de tubes selon la revendication 4, dans lequel les réceptacles (62) du second anneau concentrique sont construits avec une forme efficace pour recevoir des embouts d'aspiration (t) et les réceptacles (60, 60A, 60B) du premier anneau concentrique le sont avec une forme efficace pour recevoir des tubes à échantillon cylindriques (T, T').

6. Portoir de tubes selon la revendication 5, dans lequel chacun des réceptacles (60; 60A; 60B) du premier anneau comporte des moyens (70; 72; 70, 72A) définissant une ouverture circulaire située près d'une première extrémité du cadre (52, 54, 60, 62, 70, 72; 52A, 54A, 60A, 70A, 72A; 54B, 60B) et une emboîture fixe (66; 66A; 66B) près de l'autre extrémité du cadre (52, 54, 60, 62, 70, 72; 52A, 54A, 60A, 70A, 72A; 54B, 60B), l'ouverture (70, 72; 70A, 72A) et l'emboîture (66; 66A; 66B) étant axialement alignées de façon à recevoir un tube à échantillon (T, T').

7. Portoir de tubes selon la revendication 6, dans lequel l'emboîture fixe (66; 66A; 66B) est formée dans la portion (54; 54A; 54B) formant support.

8. Portoir de tubes selon l'une quelconque des revendications précédentes, dans lequel les moyens (70, 72; 70A, 72A) définissant une ouverture circulaire située près de l'une des extrémités du cadre (52, 54, 60, 62, 70, 72; 52A, 54A, 60A, 70A, 72A; 54B, 60B) comportent une portion, formant support supérieur fixe, espacée de la portion (54, 54A; 54B) formant support inférieur fixe.

9. Portoir de tubes selon la revendication 8, incluant en outre une portion formant support inférieur mobile (90, 92, 93; 90A, 92A, 93A) montée, avec liberté de pivotement, sur le cadre (52, 54, 60, 62, 70, 72; 52A, 54A, 60A, 70A, 72A; 54B, 60B) entre la portion (54; 54A; 54B) formant support inférieur fixe et la portion (70, 72; 70A, 72A) formant support supérieur pour pivoter en alignement avec, ou hors alignement d'avec, le support inférieur fixe (54; 54A; 54B) de façon que des tubes de deux longueurs alternées (L₁, L₂) puissent être montés dans les mêmes réceptacles (60, 60A; 60B).

10. Portoir de tubes selon la revendication 9, dans lequel la portion formant support mobile (90, 92, 93; 90A, 92A, 93A) est montée, avec liberté de pivotement, autour d'un axe généralement horizontal pour un mouvement de pivotement la faisant passer d'un plan généralement horizontal à un plan généralement vertical.

11. Portoir de tubes selon la revendication 9, dans lequel la portion formant support mobile ((90, 92, 93; 90A, 92A, 93A) est montée, avec liberté de pivotement, autour d'un axe généralement vertical pour un mouvement de pivotement dans un plan généralement horizontal.

12. Portoir de tubes selon l'une quelconque des revendications 9 à 11, dans lequel un évidement (94; 94A) est prévu dans le cadre (52, 54, 60, 62, 70, 72; 52A, 54A, 60A, 70A, 72A; 54B, 60B) prés de l'endroit où est montée, avec liberté de pivotement, la portion (90, 92, 93; 90A, 92A, 93A) formant support inférieur mobile, la portion (90, 92, 93; 90A, 92A, 93A) formant support inférieur mobile étant repliée dans l'évidement (94; 94A) lorsqu'elle n'est pas en service.

13. Portoir de tubes selon la revendication 12, incluant en outre des nervures verticales fixes (100) saillantes vers l'extérieur entre les réceptacles (60A; 60B), les évidements (94; 94A) étant positionnés à l'intérieur des nervures (100).

14. Transporteur de recyclage (10) pour amener en continu à un analyseur clinique des portoirs de tubes (30, 34, 36, 38, 50, 52, 54, 56, 58, 60, 62, 66, 70, 72, 84, 90, 92, 93, 94; 50A, 52A, 54A, 60A, 66A, 70A, 72A, 84A, 90A, 92A, 93A, 94A; 50B, 54B, 60B; 30C, 36C) conformes à l'une des revendications précédentes, le transporteur (10) comportant:
◆ un support (18) perméable aux champs magnétiques et imperméable aux liquides; et
◆ des moyens de transports (14, 24, 26, 27, 28, 29, 31; 14C, 24C) montés le long d'un chemin (31; 31B) sous le support (18) et comprenant une pluralité d'aimants (22; 22C) et des moyens pour générer avec les aimants (22; 22C) un champ magnétique mobile.

15. Transporteur selon la revendication 14, dans lequel le chemin (31; 31B) forme une boucle continue.

16. Transporteur selon la revendication 14 ou 15, dans lequel l'aimant (36; 36C) qui se trouve dans la base (30; 30C) du portoir (30, 34, 36, 38, 50, 52, 54, 56, 58, 60, 62, 66, 70, 72, 84, 90, 92, 93, 94; 50A, 52A, 54A, 60A, 66A, 70A, 72A, 84A, 90A, 92A, 93A, 94A; 50B, 54B, 60B; 30C, 36C) coopère avec le champ magnétique mobile produit par les aimants (22; 22C) des moyens de transport (14, 24, 26, 27, 28, 29, 31; 14C, 24C).

17. Transporteur selon la revendication 14 ou 15 incluant en outre des moyens de rotation (122, 124, 126; 124B) à la station d'aspiration (12; 12C) pour entraîner en rotation sur sa base (30, 36; 30A; 30C, 36C) le portoir (30, 34, 36, 38, 50, 52, 54, 56, 58, 60, 62, 66, 70, 72, 84, 90, 92, 93, 94; 50A, 52A, 54A, 60A, 66A, 70A, 72A, 84A, 90A, 92A, 93A, 94A; 50B, 54B, 60B; 30C, 36C).

18. Transporteur selon la revendication 17, dans lequel les moyens de rotation comportent des moyens formant pignons (122) sur le cadre (52, 54, 60, 62, 70, 72; 52A, 54A, 60A, 70A, 72A; 54B, 60B) et un pignon d'entraînement engrenant (124; 124B) à la station d'aspiration (12; 12C), les moyens de transport étant construits pour maintenir en engrènement à la station d'aspiration (12; 12C) le pignon (124; 124B) et les moyens formant pignon (122).

19. Transporteur selon la revendication 18, incluant en outre des moyens de signalisation (128, 130, 132, 134) pour signaler la position, sur le cadre (52), qui engrène avec le pignon d'entraînement (124; 124B).

20. Transporteur selon l'une quelconque des revendications 14 à 19, dans lequel les aimants (36) du portoir (30, 34, 36, 38, 50, 52, 54, 56, 58, 60, 62, 66, 70, 72, 84, 90, 92, 93, 94; 50A, 52A, 54A, 60A, 66A, 70A, 72A, 84A, 90A, 92A, 93A, 94A; 50B, 54B, 60B; 30C, 36C) sont attirés par les aimants (22) des moyens de transport (14, 24, 26, 27, 28, 29, 31).

21. Transporteur selon l'une quelconque des revendications 14 à 19, dans lequel les aimants (36C) du portoir (30C, 36) sont repoussés par les aimants (22C) des moyens de transport (14C, 24C).
